Europäisches Patentamt

European Patent Office

Office européen des brevets

(11) Publication number: **0 033 552**
**B1**

# (12) EUROPEAN PATENT SPECIFICATION

(45) Date of publication of patent specification: **04.05.83**

(51) Int. Cl.³: **B 65 H 7/12,** G 01 B 17/02

(21) Application number: **81200014.9**

(22) Date of filing: **09.01.81**

(54) Device for the detection of sheet-like objects.

(30) Priority: **17.01.80 NL 8000295**

(43) Date of publication of application:
**12.08.81 Bulletin 81/32**

(45) Publication of the grant of the patent:
**04.05.83 Bulletin 83/18**

(84) Designated Contracting States:
**DE FR GB IT NL SE**

(56) References cited:
**DE - A - 2 063 540**
**US - A - 3 967 143**

(73) Proprietor: **Océ-Nederland B.V.**
**St. Urbanusweg 102**
**NL-5914 CC Venlo (NL)**

(72) Inventor: **Stienstra, Jan Bonne**
**Willem de Zwijgerstraat 520**
**Venlo (NL)**

(74) Representative: **Bleukx, Lucas Lodewijk Maria, Ir.**
**et al,**
**Océ-Nederland B.V. Patents & Information Dept.**
**Postbus 101**
**NL-5900 MA Venlo (NL)**

Courier Press, Leamington Spa, England.

### Device for the detection of sheet-like objects

The invention relates to a device for the detection of the presence of more than one sheet-like object moving along a transport path, comprising an ultrasonic signal source and an ultrasonic signal receiver which are arranged on either side of the transport path, in which the source transmits a signal to the receiver through the transport path, an oscillator and a phase comparator, the inputs of which comparator are connected to the outputs of the oscillator and the receiver.

Such a device is known from British Patent Specification GB—A—1 533 630. With this known device the oscillator is set to a certain frequency. Variations in the characteristics of the source and the receiver and variations in temperature and/or humidity, as a result of which the properties of the air between the source and receiver change, cause a varying phase difference between oscillator and receiver when no sheet-like object is present. Furthermore any change in the distance between the source and the receiver will bring about a different phase difference. The result of all this is that the device cannot be operated reliably under all circumstances.

The aim of the invention is to provide a device of the type mentioned in the preamble which avoids the disadvantages mentioned.

This aim is achieved in accordance with the present invention in that the output of the phase comparator can be connected with a control input of the oscillator via a switching element, in that the source is connected with a changeover switching element which in a first position connects the source with the output of the oscillator, and in a second position connects the source with the output of the receiver, and by virtue of the fact that a control circuit is provided which—in the absence of a sheet-like object for some period—closes the switching element and maintains the changeover switching element in the second position.

This design ensures that when no sheet-like object is present the ultrasonic source and the receiver are included in a "free oscillator" (comparable with proximities between microphone and loud speaker). As a result a certain natural frequency is set up, the phase displacement between source and receiver being dependent solely on the elements in the feedback chain. At the same time the oscillator is tuned to this natural frequency. Furthermore this ensures that the distance between the source and receiver is no longer critical and a wider margin can be tolerated.

Preferably the control circuit contains a detector connected with the receiver and which reacts to amplitude changes. This ensures that the changeover switch remains in the second position only when no sheet-like object is present.

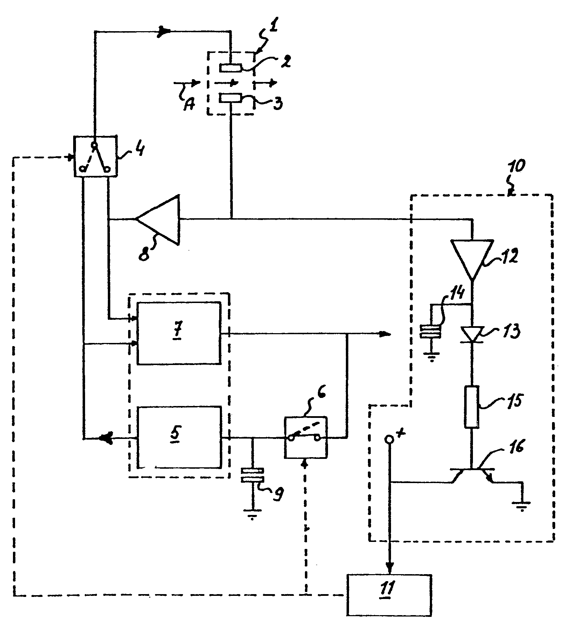

Other characteristics and advantages of the invention will be explained in the following description, where reference is made to the attached drawing which provides a schematic electrical circuit diagram for realisation of the invention.

In the diagram a device is illustrated for the detection of several sheets, such as for example can be employed in a copying machine. Here the sheets move along a transport path, schematically indicated by the arrows A. A sheet detector 1 is located by this transport path and comprises a signal source 2 for the generation of ultrasonic vibrations and a receiver 3 for these vibrations, the source 2 and the receiver 3 being arranged opposite each other on either side of the transport path. The input of the source 2 is connected via a changeover switch 4 with the output of an oscillator 5, in the embodiment shown this being a voltage-controlled oscillator (V.C.O.). The control input for the oscillator 5 is connected via a switching element 6 with the output of a phase comparator 7. The control input of the oscillator 5 is at the same time connected via a capacitor 9 to earth. In the embodiment illustrated the integrated circuit type 4046 has been employed for the oscillator 5 and the phase comparator 7. The first input of the phase comparator 7 is connected with the output of oscillator 5. Via an amplifier 8 the second input of the phase comparator 7 is connected with the receiver output. By means of changeover element 4 it is possible, as required, for source 2 to be connected with the oscillator 5 or with receiver 3. In the first case the source then transmits signals at the frequency of oscillator 5.

In the output of phase comparator 7 a direct voltage signal is now generated which is proportional to the phase displacement between the input signals. The direct voltage signal can furthermore be compared with a reference voltage from which it is possible to then derive the presence of a single sheet or a double sheet between the source and the receiver. In the second case a feed back circuit is formed which starts to oscillate at a preferred frequency. This frequency depends on a number of factors such as the temperature of the air, characteristics of the electrical components in the chain, the distance between source and receiver, etc. The oscillator is now regulated to exactly the same frequency via switch 6 and phase comparator 7.

When changeover switching takes place from the second to the first position, there is always a defined phase difference of 0° between the signal offered to the source and the signal from the receiver, regardless of the tolerances in components and the distance between source and receiver. As a result the

3    **0 033 552**    4

device can operate reliably under all circumstances and adjustments are superfluous.

The receiver 3 is also connected with an amplitude detection circuit 10 which reacts to a sudden increase in the amplitude of the signal received by the receiver 3. The amplitude detection circuit 10 contains an operational amplifier, the output of which is connected with the base of a transistor 16 via a rectifier circuit consisting of a diode 13 and a capacitor 14 and a resistor 15. The emitter of transistor 16 is connected to earth and the collector is connected with a positive terminal of a voltage supply source. As soon as the amplitude of the receiver 3 signal exceeds a certain value the transistor 16 will conduct, so that the potential in the collector will reduce. On each occasion when a change occurs in the detector from a condition in which a sheet-like object is present to a condition in which no sheet-like object is present a potential drop occurs in the collector. The collector of transistor 16 forms the output of circuit 10. This output is connected with the input of a monostable multivibrator 11, the output of which is connected with the changeover switching element 4 and switching element 6. By this means it is ensured that when, via circuit 10, no sheet-like object is detected between source 2 and receiver 3, a signal is generated by the mono-stable multivibrator 11 by means of which changeover switching element 4 connects the source 2 with receiver 3 and the switching element 6 is closed. This signal from the multivibrator 11 is generated for only a short period, after which the adjustment of oscillator 5 is performed by the capacitor 9 and the switch 6.

It is obvious that the invention is not restricted to the embodiment described and illustrated here, but that numerous modifications can be incorporated within the framework of the following claims, particularly as regards the electrical components employed.

## Claims

1. Device for the detection of the presence of more than one sheet-like object moving along a transport path, comprising an ultrasonic signal source (2) and an ultrasonic signal receiver (3) which are arranged on either side of the transport path (A), in which the source (2) transmits a signal to the receiver (3) through the transport path (A), an oscillator (5) and a phase comparator (7), the inputs of which comparator (7) are connected with the outputs of the oscillator (5) and the receiver (3), characterised in that the output of the phase comparator (7) can be connected with a control input of the oscillator (5) via a switching element (6), that the source (2) is connected with a changeover switching element (4) which in a first position connects the source (2) with the output of the oscillator (5) and in a second position connects the source (2) with the output of the receiver (3), and that a control circuit (10 and 11) is provided which in the absence of a sheet-like object for some period closes the switching element (6) and maintains the changeover switching element (4) in the second position.

2. Device in accordance with claim 1, characterised in that the control circuit (10 and 11) contains an amplitude detector (10) which is connected with the receiver (3) and which reacts to changes in amplitude.

## Patentansprüche

1. Einrichtung um die Anwesenheit von mehr als einem sich längs einer Transportbahn bewegenden blatförmigen Gegenstand nachzuweisen, welche Einrichtung versehen ist mit einer Ultraschallsignalquelle (2) und einem Ultraschallsignalempfänger (3), die auf beiden Seiten der Transportbahn (A), angeordnet sind, wobei die Quelle (2) hindurch die Transportbahn (A) ein Signal zum Empfänger (3) sendet, mit einem Oszillator (5) und einem Phasenvergleicher (7), dessen Eingänge mit den Ausgängen des Oszillators (5) und des Empfängers (3) verbunden sind, dadurch gekennzeichnet, dass der Ausgang des Phasenvergleichers (7) über ein Schaltelement (6) mit einem Steuereingang des Oszillators (5) verbunden werden kann, dass die Quelle (2) mit einem Umschaltelement (4), das in einer ersten Stellung die Quelle (2) mit dem Ausgang des Oszillators (5) und in einer zweiten Stellung die Quelle (2) mit dem Ausgang des Empfängers (3) verbindet, verbunden ist, und dass ein Steuereinheit (10 und 11), der bei Abwesenheit eines blattförmigen Gegenstandes das Schaltelement (6) während einiger Zeit schliesst und das Umschaltelement (4) in der zweiten Stellung hält, vorgesehen ist.

2. Einrichtung nach Anspruch 1, dadurch gekennzeichnet, dass der Steuereinheit (10 und 11) einen mit dem Empfänger (3) verbundenen und auf Amplitudenänderungen ansprechenden Amplitude Detektor (10) umfasst.

## Revendications

1. Dispositif pour la détection de la présence de plus d'un objet sous forme de feuille se déplaçant le long d'un trajet de transport, comportant une source (2) de signal ultra-sonique et un récepteur (3) de signal ultra-sonique dispóses de chaque côté du trajet (A) de transport, dans lequel la source (2) transmet un signal au récepteur (3) à travers le trajet (A) de transport, un oscillateur (5) et un comparateur de phase (7), les entrées dudit comparateur (7) étant connectées aux sorties de l'oscillateur (5) et du récepteur (3), caractérisé par le fait que la sortie du comparateur de phase (7) peut être reliée à une entrée de commande de l'oscillateur (5) au moyen d'un élément (6) de commutation, en ce que la source (2) est reliée à un élément (4) de commutation inverseur qui dans une première position connecte la source (2) à la sortie de l'oscillateur (5) et dans une seconde position connected la source (2) à la sortie du récepteur (3), et en ce qu'il comporte un circuit (10, 11) de commande qui, en l'absence d'objet sous forme de feuille pendant une certain durée, ferme l'élément (6) de commutation et maintient l'élément (4) de commutation inverseur dans sa second position.

2. Dispositif suivant la revendication 1, caractérisé par le fait que le circuit (10, 11) de commande comprend un détecteur (10) d'amplitude qui est relié au récepteur (3) et qui réagit aux variations de l'amplitude.